# FASCICULE DE BREVET EUROPEEN

(11) **EP 0 601 899 B1**
(45) Date de publication et mention de la délivrance du brevet: **10.07.1996**
(21) Numéro de dépôt: 93402382.1
(22) Date de dépôt: 29.09.1993
(51) Int. Cl.: F16B 37/04

(54) **Ecrou encagé perfectionné**
Käfigmutter
Caged nut

(30) Priorité: 11.12.1992 FR 9214965
(43) Date de publication de la demande: 15.06.1994
(73) Titulaire: RAPID S.A., F-75017 Paris (FR)
(72) Inventeur: Leon, Jean-Pierre, F-78800 Houilles (FR)
(74) Mandataire: Berger, Helmut

(56) Documents cités:
- EP-A- 0 499 506
- FR-A- 2 491 170
- FR-A- 2 583 472
- FR-A- 2 672 647

## Description

La présente invention a essentiellement pour objet un écrou encagé perfectionné.

Les écrous encagés sont connus depuis déjà longtemps. Ils sont constitués de deux éléments, à savoir un écrou et une cage dans laquelle est logé l'écrou et qui permet le montage de ce dernier dans un orifice pratiqué dans un élément quelconque, tel que par exemple un panneau qui doit être fixé sur une pièce quelconque telle qu'un autre panneau.

C'est ainsi que l'on connaît d'après le document FR-A-2 583 472 un écrou encagé correspondant au préambule de la revendication 1.

Le but de l'invention est de tirer avantage de l'existence de la cage permettant de retenir l'écrou sur le panneau, pour conférer à l'ensemble écrou-cage des propriétés de freinage s'exerçant sur la vis, de sorte qu'une fois achevée la fixation des panneaux par vissage, ladite fixation devienne indesserrable.

A cet effet, l'invention a pour objet un écrou encagé perfectionné et du type comprenant un écrou logé dans une cage présentant sensiblement la forme d'un U enserrant l'écrou et constituée par deux branches repliées depuis un fond dans lequel est ménagé un orifice pour permettre le passage d'un élément fileté vissé dans le trou taraudé de l'écrou, ladite cage comportant des pattes découpées qui coopèrent avec ledit élément fileté, caractérisé en ce que les pattes sont découpées soit dans le bord de l'orifice dans le fond de la cage, soit dans les branches de ladite cage, de façon à s'étendre en direction et au-delà du bord du trou taraudé de l'écrou pour pouvoir exercer une action de freinage sur l'élément fileté vissé dans ledit trou sous l'effet de la déformation élastique des pattes.

Selon une autre caractéristique de cet écrou encagé, les pattes précitées sont découpées en partie haute des deux branches de la cage et présentent une extrémité libre légèrement infléchie en direction des extrémités libres des branches.

Selon encore une autre caractéristique de l'invention, l'écrou est un écrou de forme parallélépipèdique qui peut être retenu par deux bords opposés entre les deux branches de la cage ou bien qui peut être retenu par deux coins opposés traversant les branches de la cage.

Mais les caractéristiques et avantages de l'invention apparaîtront mieux dans la description détaillée qui suit et se réfère aux dessins annexés, donnés uniquement à titre d'exemple, et dans lesquels :

La figure 1 est une vue en perspective d'un écrou encagé conforme à cette invention, et d'une vis en prise avec cet écrou encagé.

La figure 2 est une vue en élévation suivant la flèche II de la figure 1.

La figure 3 est une vue en perspective éclatée d'un deuxième mode de réalisation d'écrou encagé selon cette invention, le panneau avec orifice permettant le montage de cet écrou encagé étant lui aussi représenté.

La figure 4 est une vue en coupe de cet écrou encagé en position montée sur le panneau.

La figure 5 est une vue de dessous de l'écrou encagé suivant la flèche V de la figure 4.

En se reportant à ces figures, on voit un écrou encagé 1 qui, comme cela est bien connu en soi, comporte un écrou 2, par exemple de forme parallélépipèdique qui est logé dans une cage 3 présentant sensiblement la forme d'un U, c'est-à-dire comportant une embase ou un fond 4 et deux branches 5 repliées depuis le fond 4 et enserrant l'écrou 2 qui est ainsi maintenu prisonnier dans sa cage.

Le fond 4 de la cage 3 peut encore comporter des languettes repliées 6 contribuant au maintien quelque peu flottant de l'écrou 2 dans la cage 3.

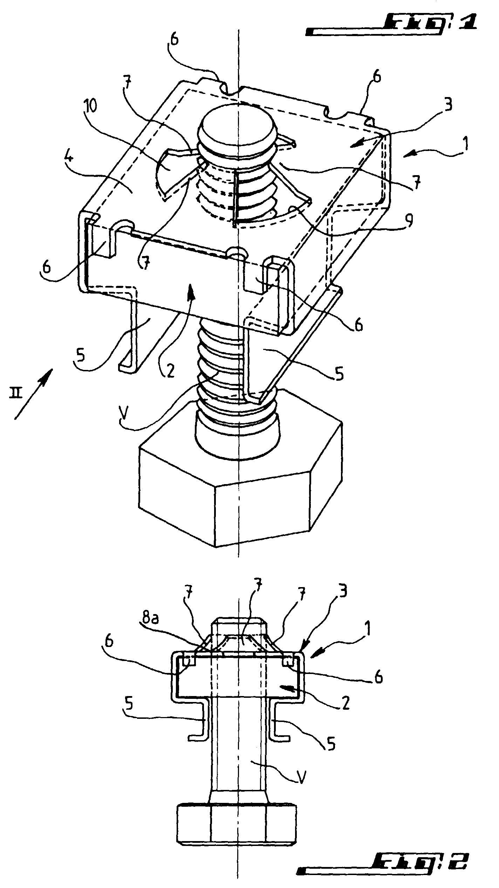

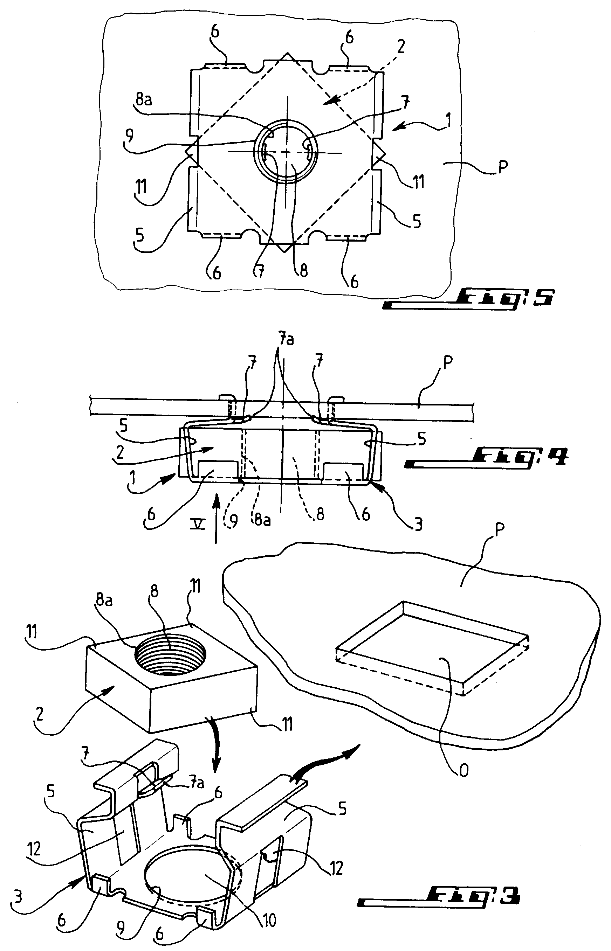

L'écrou encagé 1 peut, comme cela est bien connu, être monté par les branches 5 de la cage 3 dans l'orifice O d'une pièce quelconque, tel qu'un panneau P bien visible sur la figure 3.

L'écrou 2 peut bien entendu recevoir une vis telle que V (figures 1 et 2) qui permettra la fixation du panneau P sur une pièce quelconque, telle que par exemple un autre panneau (non représenté).

Conformément à l'invention, la cage 3 comporte des pattes 7 qui, en l'absence de la vis V, s'étendent en direction du trou taraudé 8 de l'écrou 2 et au-delà du bord 8a de ce trou (figures 3 à 5).

Ainsi, lorsque l'élément fileté ou la vis V sera vissée dans le trou taraudé 8 de l'écrou 2, les pattes élastiquement déformables 7 viendront en prise avec le filetage de la vis V et offriront une certaine résistance au vissage et également au dévissage lorsque les deux pièces ou panneaux tels que P seront assemblés. En d'autres termes, les pattes 7 exerçant une action de freinage sur la vis V procureront à l'assemblage des qualités indéniables d'indesserrabilité.

Dans le mode de réalisation illustré par les figures 1 et 2, on voit que les pattes 7 sont découpées dans le fond 4 de la cage 3. Plus précisément, les pattes 7 prennent naissance sur le bord 9 de l'orifice habituellement ménagé dans le fond 4 pour laisser le passage à la vis V. Sur les figures 1 et 2, on voit que l'extrémité libre des pattes 7 est en prise, en début de vissage, avec le filetage V, et elles exercent ainsi une action de freinage sur la vis V de sorte qu'en fin de vissage, c'est-à-dire en position assemblée des pièces, le dévissage est avantageusement empêché, ce qui confère à l'assemblage obtenu des qualités indéniables de bonne tenue aux chocs ou aux vibrations par exemple.

Dans le mode de réalisation illustré par les figures 3 à 5, les pattes 7 sont découpées dans la partie haute des branches 5 de la cage, et on voit ici que leurs extrémités libres, avant vissage, s'étendent au-delà du bord 8a du trou taraudé 8 de l'écrou 2, comme cela apparaît clairement sur les figures 4 et 5.

Plus précisément, les pattes 7 s'étendent au-dessus de la face d'écrou en regard du panneau P, comme on le voit bien sur la figure 4, et ces pattes 7 présentent une extrémité libre 7a légèrement infléchie en direction des extrémités libres des branches 5 de la cage 3. Ainsi, les pattes 7 pourront plus aisément venir en prise avec le filetage de l'écrou 2 pour se déformer par la suite et créer une action de freinage sur la vis V.

Dans les deux modes de réalisation qui viennent d'être décrits, l'écrou 2 est un écrou parallélépipèdique qui peut, au choix, être monté dans la cage 3 de deux façons différentes, étant bien entendu que, dans un montage comme dans l'autre, les pattes de freinage 7 pourront être découpées soit dans le fond 4 de la cage, soit dans les branches 5 de cette cage.

Sur les figures 1 et 2, on voit que l'écrou 2 est retenu par deux bords opposés entre les branches 5 de la cage. Autrement dit, ces bords opposés sont sensiblement parallèles aux branches 5 de ladite cage.

Sur les figures 3 à 5, on voit que l'écrou 2 est monté par deux coins opposés 11 entre les branches 5 de la cage 3. Plus précisément, les coins opposés 11 traversent des orifices 12 (figure 3) ménagés dans les branches 5, de sorte que l'écrou 2 est ainsi immobilisé positivement en rotation dans sa cage 3. Il est à noter aussi que dans un cas (figures 1 et 2), comme dans l'autre (figures 3 à 5) les petites languettes repliées 6 contribuent à maintenir prisonnier l'écrou 2 dans sa cage 3, étant entendu que dans le premier cas (figures 1 et 2), ces languettes 6 sont indispensables pour empêcher l'écrou 2 de sortir de la cage 3, ce qui n'est pas le cas dans la réalisation représentée sur les figures 3 à 5, puisqu'ici les coins opposés 11 de l'écrou 2 maintiennent positivement l'écrou dans sa cage suivant deux directions orthogonales.

On ajoutera ici que, dans les deux modes de réalisation décrits et illustrés, les branches 5 de la cage 3, comme cela est connu en soi, comportent des extrémités libres tournées vers l'extérieur de façon à permettre l'accrochage de la cage sur le bord de l'orifice O du panneau P.

On a donc réalisé suivant l'invention un écrou encagé perfectionné dont la cage possède une fonction supplémentaire, à savoir une fonction de freinage de la vis au vissage dans l'écrou, ce qui confère à l'assemblage réalisé avec cet écrou encagé des qualités remarquables d'indesserrabilité.

Cette invention n'est nullement limitée aux modes de réalisation décrits et illustrés qui n'ont été donnés qu'à titre d'exemple.

C'est ainsi que l'écrou pourrait avoir une forme autre que parallélépipèdique et que le montage de l'écrou dans sa cage pourrait être autre que celui décrit et représenté, puisque cela ne changerait rien au fonctionnement des pattes d'auto-freinage découpées dans le fond ou dans les branches de la cage. On pourrait également, sans sortir du cadre de l'invention, faire en sorte que les pattes 7, découpées dans les branches 5 de la cage, traversent le corps d'écrou 2 de façon que leurs extrémités libres débouchent dans le trou taraudé de cet écrou.

## Revendications

1. Ecrou encagé perfectionné et du type comprenant un écrou (2) logé dans une cage (3) présentant sensiblement la forme d'un U enserrant l'écrou (2) et constituée par deux branches (5) repliées depuis un fond (4) dans lequel est ménagé un orifice (10) pour permettre le passage d'un élément fileté (V) vissé dans le trou taraudé (8) de l'écrou (2), ladite cage (3) comportant des pattes découpées (7) qui coopèrent avec ledit élément fileté (V), caractérisé en ce que les pattes (7) sont découpées soit dans le bord (9) de l'orifice (10) dans le fond (4) de la cage (3), soit dans les branches (5) de ladite cage (3), de façon à s'étendre en direction et au-delà du bord (8a) du trou taraudé (8) de l'écrou (2) pour pouvoir exercer une action de freinage sur l'élément fileté (V) vissé dans ledit trou sous l'effet de la déformation élastique des pattes (7).

2. Ecrou encagé selon la revendication 1, caractérisé en ce que les pattes précitées (7) sont découpées en partie haute des deux branches (5) de la cage (3) et présentent une extrémité libre (7a) légèrement infléchie en direction des extrémités libres des branches (5).

3. Ecrou encagé selon la revendication 1 ou 2, caractérisé en ce que l'écrou (2) est un écrou parallélépipèdique retenu par deux bords opposés entre les deux branches (5) de la cage (3) ou retenu par deux coins opposés (11) traversant les branches (5) de ladite cage.

## Patentansprüche

1. Verbesserte Käfigmutter derjenigen Gattung mit einer in einem Käfig (3) untergebrachten Mutter (2), der etwa die Gestalt eines die Mutter (2) umschliessenden U's aufweist und durch zwei von dem Boden (4) aus umgebogene Schenkel (5) gebildet wird, in welchem Boden eine Öffnung (10) gebildet ist, um den Durchgang eines in das Gewindeloch (8) der Mutter (2) eingeschraubten Gewindeelementes (V) zu gestatten, wobei der besagte Käfig (3) ausgeschnittene Ansatzlappen (7), die mit dem besagten Gewindeelement (V) zusammenwirken, aufweist, dadurch gekennzeichnet, dass die Ansatzlappen (7) entweder in dem Rand (9) der Öffnung (10) in dem Boden (4) des Käfigs (3) oder in den Schenkeln (5) des besagten Käfigs (3) ausgeschnitten sind, um sich in Richtung auf und über den Rand (8a) hinaus des Gewindeloches (8) der Mutter (2) zu erstrecken, um eine Bremswirkung auf das in dem besagten Loch eingeschraubte Gewindeelement (V) unter der Wirkung der elastischen Verformung der Ansatzlappen (7) ausüben zu können.

2. Käfigmutter nach Anspruch 1, dadurch gekennzeichnet, dass die vorgenannten Ansatzlappen (7) im oberen Teil der beiden Schenkel (5) des Käfigs (3) ausgeschnitten sind und ein freies in Richtung auf die freien Enden der Schenkel (5) leicht umgebogenes Ende (7a) aufweisen.

3. Käfigmutter nach Anspruch 1 oder 2, dadurch gekennzeichnet, dass die Mutter (2) eine quaderförmige Mutter ist, die durch zwei entgegengesetzte Ränder zwischen den beiden Schenkeln (5) des Käfigs (3) zurückgehalten oder durch zwei entgegengesetzte die Schenkel (5) des besagten Käfigs durchsetzende Ecken (11) zurückgehalten wird.

## Claims

1. Improved caged nut of the type comprising a nut (2) housed in a cage (3) substantially exhibiting the shape of a U tightly enclosing the nut (2) and constituted by two legs (5) bent back from a bottom (4) in which is formed an aperture (10) to permit the passage of a threaded element ( V) screwed into the tapped hole (8) of the nut (2), the said cage (3) comprising cut-out lugs (7) which cooperate with the said threaded element (V), characterized in that the lugs (7) are cut out either in the edge (9) of the aperture (10) in the end wall (4) of the cage (3) or in the legs (5) of the said cage (3), so as to extend towards and beyond the edge (8a) of the tapped hole (8) of the nut (2) so as to be able to exert a braking action upon the threaded element (V) screwed into the said hole under the effect of the elastic deformation of the lugs (7).

2. Caged nut according to claim 1, characterized in that the aforesaid lugs (7) are cut out in the upper portion of both legs (5) of the cage (3) and exhibit a free end (7a) slightly bent towards the free ends of the legs (5).

3. Caged nut according to claim 1 or 2, characterized in that the nut (2) is a parallelepipedic nut retained by two opposite edges between both legs (5) of the cage (3) or retained by two opposite corners (11) extending through the legs (5) of the said cage.
